# EUROPÄISCHE PATENTSCHRIFT

(11) **EP 0 752 349 B1**
(45) Veröffentlichungstag und Bekanntmachung des Hinweises auf die Patenterteilung: **24.03.2004**
(21) Anmeldenummer: 96109139.4
(22) Anmeldetag: 07.06.1996
(51) Int. Cl.: B60R 21/26, F17C 3/06, F16K 31/00

(54) **Pyrotechnikfreier Gasgenerator**
Gas generator free of pyrotechnical means
Générateur de gaz exempt de moyens pyrotechniques

(30) Priorität: 01.07.1995 DE 19524094
(43) Veröffentlichungstag der Anmeldung: 08.01.1997
(73) Patentinhaber: TRW Airbag Systems GmbH, 84544 Aschau am Inn (DE)
(72) Erfinder: Bauer, Hermann, 83339 Stöttham (DE); Bender, Richard, Dr., 91207 Lauf (DE); Fürst, Franz, 84453 Mühldorf (DE); Stark, Armin, Dr., 84453 Mühldorf/Inn (DE); Winterhalder, Marc, 84518 Garching (DE); Zeuner, Siegfried, Dr., 81369 München (DE)
(74) Vertreter: Degwert, Hartmut, Dipl.-Phys.

(56) Entgegenhaltungen:
- EP-A- 0 641 689
- CH-A- 445 318
- US-A- 5 062 662
- US-A- 5 069 478
- US-A- 5 098 123
- US-A- 5 145 208
- US-A- 5 230 532

## Beschreibung

Die Erfindung betrifft Gasgeneratoren, insbesondere für passive Rückhaltesysteme, nach dem Oberbegriff des Patentanspruchs 1.

Es sind Rückhaltesysteme bekannt, die mit einem Gassack (Airbag) ausgestattet sind, der durch ein, von einem Gasgenerator erzeugtes, Gas aufgeblasen wird. Hierbei unterscheidet man zwei Grundtypen: den rein pyrotechnischen Gasgenerator und den Hybrid-Gasgenerator. Beim rein pyrotechnischen Gasgenerator erfolgt die Zündung und die Gaserzeugung durch die Verbrennung geeigneter pyrotechnischer Treibmittel (i.A. Festtreibstoffe). Beim Hybrid-Gasgenerator erfolgt nur noch die Zündung und Gaserwärmung durch Verbrennung geeigneter pyrotechnischer Treibmittel. Hybrid-Gasgeneratoren bestehen aus einem mit Gas gefüllten Behälter. Dieser Gasbehälter steht unter Druck. Um das vorzeitige Ausströmen des Gases zu verhindern, ist der Behälter durch einen Verschluß in Form einer Berstmembran verschlossen. Weil dieses Gas nicht erst pyrotechnisch erzeugt werden muß, wird es als Kaltgas bezeichnet. Weiterhin beinhaltet ein Hybrid-Gasgenerator einen Anzünder, der in eine Brennkammer ragt und dort im Falle der Auslösung einen Brennsatz in Form von z.B. Treibsatzscheiben zündet. Dieses pyrotechnisch erzeugte Gas, auch Heißgas genannt, zerstört den Verschluß, so daß das Kaltgas aus dem Behälter entweichen kann. Heißgas und Kaltgas vermischen sich und entweichen durch eine Abströmöffnung nach außen, wo sie zum Aufblasen eines Gassackes dienen oder einem anderen Verbraucher zugeführt werden.

Nachteilig an diesen Anordnungen ist jedoch, daß der Gasstrom Schadstoffe wie Schadgase und Verbrennungsrückstände beinhaltet, die durch den Abbrand der pyrotechnischen Komponenten (Treibsatzscheiben) entstehen. Die dafür benötigten Stoffe sind im höchsten Maße explosiv, so daß hierfür spezielle Vorsichtsmaßnahmen benötigt werden. Dies kann bei der Herstellung und Montage zu Sach- und/oder Personenschäden führen. Da die pyrotechnischen Komponenten, zum einen über einen langen Zeitraum hinweg, ihre Funktionsfähigkeit bewahren müssen, aber zum anderen extrem feuchteempfindlich sind, ist es notwendig, die Brennkammer hermetisch dicht zu verschließen. Auch wird zur Zündung der Treibsatzscheiben ein weiterer pyrotechnischer Anzünder benötigt, der ebenfalls die genannten Nachteile aufweist. Für die Entsorgung und/oder Wiederverwertung muß der Gasgenerator entweder erst gezündet oder aufwendig geöffnet werden und kann erst nach der Reinigung von Schadstoffen dem Recycling Prozess zugeführt werden.

Aus der gattungsgemäßen US-A-5,069,478 ist es bereits bekannt, die Berstmembran eines Druckgasbehälters durch Umwandlung von elektrischer Energie in kinetische Energie zu öffnen. Die elektrische Energie kann aus einem Akkumulator des Fahrzeugs zur Verfügung gestellt werden. Ferner ist aus der US-A-5,145,208 bereits die Öffnung einer Berstmembran mittels eines Schneidwerkzeugs bekannt, das durch einen Elektromagnet angetrieben wird. Weiterhin ist es aus der US-A-5,062,662 bekannt, einen Druckgasbehälter mit einem verschwenkbaren Verschlußdeckel auszustatten, der nach Entriegelung mittels einer durch einen Elektromagnet betätigten Stange durch den Gasdruck in seine Öffnungsstellung verschwenkt wird.

Der erfindungsgemäße Gasgenerator für passive Rückhaltesysteme in Kraftfahrzeugen weist gleichfalls einen unter Druck stehenden Gasbehälter auf, der durch eine Berstmembran verschlossen ist. Die Berstmembran wird durch Umwandlung von elektrischer Energie geöffnet bzw. beschädigt. Dazu wird die Berstmembran einem Funkenüberschlag durch plötzliche Entladung eines Kondensators ausgesetzt.

Die mit der Erfindung erzielten Vorteile bestehen insbesondere darin, daß das Öffnen des Verschlusses des Kaltgasbehälters ohne pyrotechnische Komponenten schnell und kontrolliert erzielt werden kann. Neben der einfacheren Generatorbauweise ist hier die Gaserzeugung absolut schadstofffrei, es verbleiben keine schädlichen Rückstände in dem Gasgenerator. Der Gasgenerator kann nach dem Gebrauch problemlos der Entsorgung oder Wiederverwertung zugeführt werden. Eine Brennkammer wird nicht mehr benötigt. Es kann auf pyrotechnische Anzünder verzichtet werden. Der Aufbau eines Gasgenerators verkleinert sich. Herstellung, Montage und Lagerung werden stark vereinfacht.

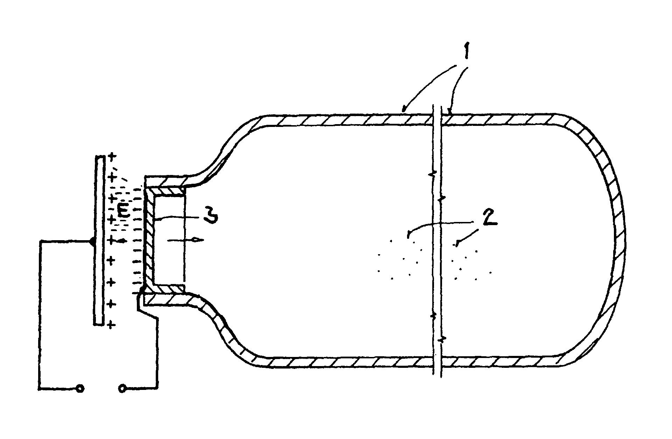

Ein Ausführungsbeispiel der Erfindung wird im folgenden anhand der Zeichnung erläutert.

Die einzige Figur zeigt einen Kaltgasbehälter 1, in dem sich Kaltgas 2 befindet. Der Kaltgasbehälter 1 ist durch einen Verschluß 3 z.B. in Form einer Berstmembran verschlossen und steht unter Druck.

Eine Öffnung der Berstmembran 3 kann dadurch erreicht werden, daß direkt elektrische Energie aus einem extern angebrachten Kondensator (nicht abgebildet) durch plötzliche Entladung (z.B. Kurzschluß) in Form eines Stromflusses oder Funkenüberschlages auf die Membran übertragen wird, wobei diese durchschlagen wird.

## Patentansprüche

1. Gasgenerator für passive Rückhaltesysteme in Kraftfahrzeugen mit mindestens einem durch eine Berstmembran (3) verschlossenen, gefüllten, unter Druck stehenden Gasbehälter (1), dessen Berstmembran (3) durch Umwandlung von elektrischer Energie geöffnet oder beschädigt wird, **dadurch gekennzeichnet, daß** die Berstmembran (3) einem Funkenüberschlag durch plötzliche Entladung eines Kondensators ausgesetzt wird.

## Claims

1. A gas generator for passive restraint systems in motor vehicles, comprising at least one filled, pressurized gas container (1) closed by an associated bursting diaphragm (3) which is opened or damaged by conversion of electric energy, **characterized in that** the bursting diaphragm (3) is exposed to an arc-over by a sudden discharge of a capacitor.

## Revendications

1. Générateur de gaz pour des systèmes de retenue passifs dans des véhicules automobiles, comportant au moins un réservoir de gaz (1) sous pression, rempli et fermé par une membrane de rupture (3) qui est ouverte ou endommagée par conversion d'énergie électrique, **caractérisé en ce que** la membrane de rupture (3) est soumise à un claquage par étincelles dû à la décharge subite d'un condensateur.
